# EUROPEAN PATENT APPLICATION

(11) **EP 2 587 041 A2**
(43) Date of publication of application: **01.05.2013**
(21) Application number: 12189464.6
(22) Date of filing: 22.10.2012
(51) Int. Cl.: F02K 9/94

(54) **System and method for controlling an object traveling through exoatmospheric space**

(30) Priority: 25.10.2011 US 201113281265
(71) Applicant: General Dynamics Ordnance and Tactical Systems, Inc., St. Petersburg, FL 33716 (US)
(72) Inventor: Schroeder, Richard W., Healdsburg, CA 95448 (US)
(74) Representative: Maiwald Patentanwalts GmbH

(57) **Abstract**

A system for controlling an object traveling through exoatmospheric space is disclosed herein. The system includes, but is not limited to, a pressure vessel, a pair of solid propellant grains associated with the pressure vessel that is configured to direct a gas into the pressure vessel during combustion, an exhaust nozzle that is in fluid communication with the pressure vessel, and a valve that is coupled with the exhaust nozzle and that is configured to selectively obstruct the gas from venting through the exhaust nozzle.

## Description

### TECHNICAL FIELD

The present invention generally relates to an object traveling outside of the earth's atmosphere (exoatmospheric) and more particularly relates to a system and method for controlling an object traveling through exoatmospheric space.

### BACKGROUND

Object traveling through exoatmospheric space, including, but not limited to, spacecraft, satellites, warheads, and anti-ballistic missiles, have traditionally been controlled using gas-emitting control systems which direct gas through one or more exhaust nozzles on the object. As the gas passes through the exhaust nozzle, an equal and opposite force will act on the object that will cause the object to move in a direction opposite to the direction of the exhausted gas. In this manner, both the attitude and the velocity vector of an object traveling through exoatmospheric space can be controlled.

Conventionally, such gas-emitting control systems have combusted either a liquid propellant or a solid propellant to generate the gas needed to control the object. While both types of systems are adequate for controlling the object as it travels through exoatmospheric space, there are problems associated with both types of systems that leave ample room for improvement.

For example, conventional liquid propellants are advantageous in that they may be turned on and off at will and may be very precisely controlled to produce low pressure gas expulsions, but they are well known to be exceedingly corrosive. As a result of this corrosiveness, systems that employ liquid propellants are prone to leaks which, in some cases, may be toxic to humans.

Conventional solid propellants are not corrosive and are therefore not prone to leaks. However gas-emitting control systems that utilize solid propellants cannot be turned on and off at will. On the contrary, once the solid propellant is ignited, it must either remain ignited until the propellant is entirely consumed or it may be extinguished. However, once the solid propellant is extinguished, it cannot be reignited. Accordingly, in order to effectively use a solid propellant to control the object as it travels through exoatmospheric space, opposing nozzles that continuously burn solid propellants must be utilized to provide opposing forces that accomplish the same goal of turning a nozzle on or off. This, in turn, requires the consumption of far more solid propellant than would be necessary to control the object if the solid propellant could be turned on and off at will.

Additionally, solid propellants must be exposed to relatively high pressures in order to support combustion. An exemplary range of pressure for a conventional solid propellant is from five hundred psi to two thousand PSI. If the pressure falls below this exemplary range, combustion of the solid propellant cannot be supported and the flame will extinguish. If the pressure rises above this exemplary range, solid propellant will combust too quickly and may explode. Because of the relatively high pressure of even the lower end of this exemplary range, it is very difficult to apply relatively low force gas expulsions to the object.

One solution to the above described problems is disclosed and taught in US publication 2009/0320443 A1, submitted by Geisler, et. al. (referred to herein as "Geisler"). Geisler teaches a solid propellant thrust control system for controlling combustion of solid propellants in an opposing grains solid propellant rocket engine (OGRE). Geisler discloses an opposing grains rocket engine wherein the solid propellant is divided into a solid fuel and a solid oxidizer that are positioned opposite to one another within a pressure vessel. The solid fuel and the solid oxidizer are mounted in a manner that allows them to be moved towards and away from one another. When the solid fuel and the solid oxidizer are brought close enough together, they will automatically combust. The combustion is directed out of the pressure vessel through an exhaust nozzle, thus imparting a force to the object that causes the object to move in response. When the solid fuel and the solid oxidizer are moved away from one another, the combustion will automatically extinguish and the force acting on the object will automatically cease. This process of initiating and extinguishing combustion can be repeated as many times as desired. Additionally, when using an OGRE engine, combustion can be maintained at a relatively low pressure (e.g. it has been observed that combustion may be maintained as little as twenty PSI).

While Geisler has overcome the primary problems associated with use of conventional solid propellants in a gas-emitting control system, Geisler still leaves room for improvement. For example, using the OGRE engine as taught by Geisler to control an object moving through exoatmospheric space would require the positioning of multiple independent OGRE engines at various locations around the object. This is because the OGRE engine taught by Geisler is incapable of sharing the solid fuel or the solid oxidizer of another OGRE engine. Accordingly, each independent OGRE engine would be required to carry more solid fuel and more solid oxidizer then it would likely consume during the span of time that the object travels through exoatmospheric space. The use of multiple, independent OGRE engines to control an object as it travels through exoatmospheric therefore requires that the object carry more weight than is likely to be needed.

### BRIEF SUMMARY

Systems and methods for diverting and controlling the attitude of an object while traveling through exoatmospheric space are disclosed herein.

In a first non-limiting embodiment, the system includes, but is not limited to, a pressure vessel, a pair of solid propellant grains associated with the pressure vessel that are configured to direct a gas into the pressure vessel during combustion, an exhaust nozzle that is in fluid communication with the pressure vessel, and a valve that is coupled with the exhaust nozzle, the valve being configured to selectively obstruct the gas from venting through the exhaust nozzle.

In another non-limiting embodiment, the system includes, but is not limited to, a first pressure vessel. The system further includes a pair of solid propellant grains that are disposed opposite one another. The pair of solid propellant grains are configured to combust when positioned within a predetermined distance of one another and to extinguish when moved apart from one another. The pair of solid propellant grains are associated with the first pressure vessel such that a gas generated during combustion of the solid propellant grains enters the first pressure vessel. The system further includes an actuator that is configured to selectively move the pair of solid propellant grains towards and away from one another. The system further includes a plurality of exhaust nozzles that are in fluid communication with the first pressure vessel and that are configured to exhaust the gas from the first pressure vessel. The system further includes a plurality of valves that are associated, respectively, with the plurality of exhaust nozzles. Each valve is configured to selectively obstruct the flow of gas through a respective exhaust nozzle. The system still further includes a controller that is operatively coupled to each valve of the plurality of valves. The controller is configured to selectively open and close each valve.

In another non-limiting embodiment, the method includes, but is not limited to, the steps of moving a pair of solid propellant grains towards one another to induce combustion, routing a gas formed by the combustion into a pressure vessel, and selectively opening a valve to exhaust the gas from the pressure vessel through an exhaust nozzle, whereby movement of the object can be effected.

### BRIEF DESCRIPTION OF THE DRAWINGS

The present invention will hereinafter be described in conjunction with the following drawing figures, wherein like numerals denote like elements, and

FIG. 1 is a schematic view of an embodiment of a system for controlling an object traveling through exoatmospheric space;

FIG. 2 is a schematic view of the system of FIG. 1 as combustion occurs and begins to pressurize a pressure vessel;

FIG. 3 is a schematic view of the system of FIG. 2 with an exhaust nozzle open to cause rotation of an object about a Z axis;

FIG. 4 is a schematic axial view of the system of FIG. 2 with a pair of aft mounted exhaust nozzles open to cause rotation of the object about an X axis;

FIG. 5 is a schematic view of the system of FIG. 2 with a center-of-gravity-aligned nozzle open to cause translation of the object along a Y axis;

FIG. 6. is a schematic view of the system of FIG. 2 during detection of an overpressure condition;

FIG. 7 is a schematic view of the system of FIG. 6 depicting a remediating response to the overpressure condition;

FIG. 8 is a schematic view of an alternate embodiment of a system for controlling an object traveling through exoatmospheric space;

FIG. 9 is a schematic view of another alternate embodiment of a system for controlling an object traveling through exoatmospheric space; and

FIG. 10 is a block diagram of a method for controlling an object traveling through exoatmospheric space.

### DETAILED DESCRIPTION

The following detailed description is merely exemplary in nature and is not intended to limit the disclosure or the application and uses of the disclosure. Furthermore, there is no intention to be bound by any theory presented in the preceding background or the following detailed description.

An improved system and method for controlling an object traveling through exoatmospheric space is disclosed herein. The system and method disclosed herein improves upon the teachings of US publication 2009/0320443 A1 submitted by Geisler, which is hereby incorporated herein by reference in its entirety. Geisler teaches a solid propellant rocket engine that separates the fuel and the oxidizer into two separate masses. When thrust is desired, Geisler teaches that the fuel and the oxidizer can be moved towards one another. When the fuel and the oxidizer get close enough to one another, they will automatically combust and produce gas. The gas is directed through an exhaust nozzle to generate thrust. The closer that the fuel and the oxidizer are moved towards one another, the higher the burn rate will be and, consequently, the higher the thrust will be. The further that the fuel and the oxidizer are away from one another, the lower the burn rate will be and, consequently, the lower the thrust will be. When the distance between the fuel and the oxidizer becomes too great, the combustion will be extinguished and the thrust will cease.

The system and method disclosed herein utilizes the separate fuel and oxidizer of Geisler's OGRE engine. But rather than simply exhausting the gas as quickly as it is generated through a nozzle to generate thrust and then increasing or diminishing the burn rate to control the magnitude of the thrust, the present system and method collects the gas in a pressure vessel that is designed and constructed to contain pressurized gas. The pressurized gas that is accumulated within the pressure vessel may then be selectively exhausted through any one (or more) of multiple exhaust nozzles that are associated with the pressure vessel. Each exhaust nozzle has an associated valve that may be selectively opened and closed to alternately allow and obstruct the flow of gas. By exhausting the gas through a selected exhaust nozzle(s), the thrust can be routed to any location on an object where it will be needed to cause the desired movement of the object (e.g., rotation and translation) as it moves through exoatmospheric space. To selectively exhaust the gas through one or more desired exhaust nozzles, the system includes a controller to control the opening and closing of the valves associated with each nozzle. The controller may also control the movement of the fuel and the oxidizer towards and away from one another.

A greater understanding of the systems and methods disclosed herein for controlling an object traveling through exoatmospheric space may be obtained through a review of the illustrations accompanying this application together with a review of the detailed description that follows.

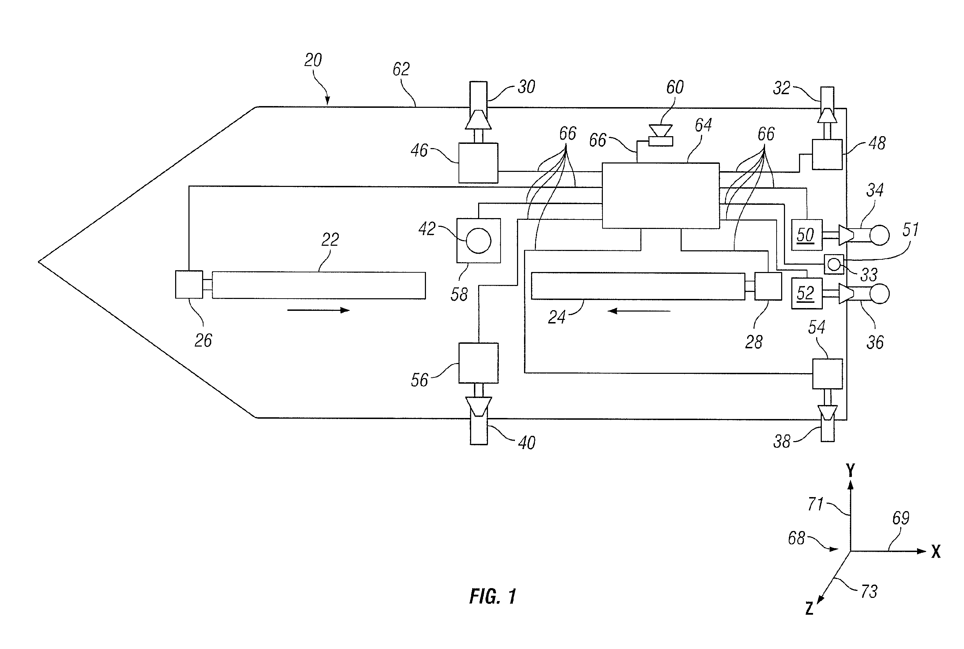

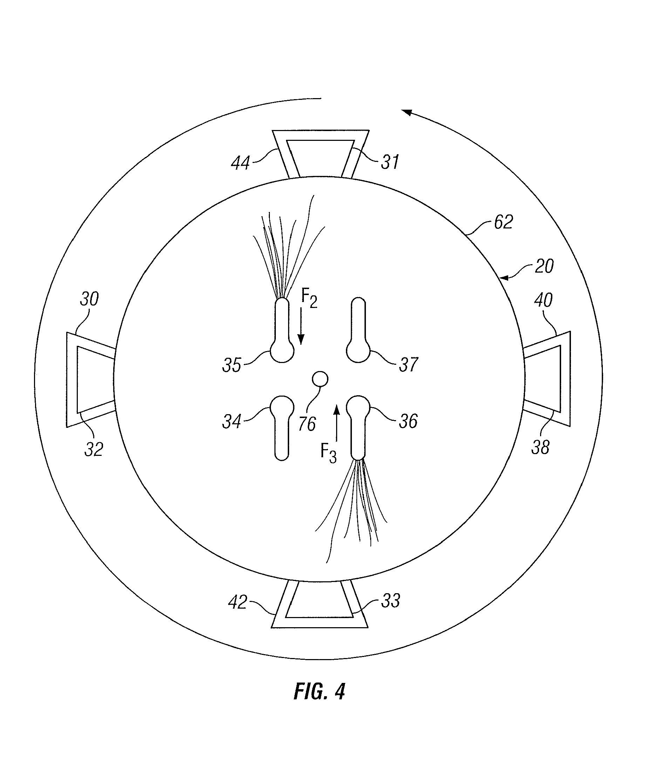

FIG. 1 is a schematic view of an embodiment of a system 20 for controlling an object traveling through exoatmospheric space. System 20 is compatible for use in multiple applications. For example, system 20 may be used to control movement of a manned spacecraft, an unmanned spacecraft, a satellite, the warhead of an intercontinental ballistic missile, an anti-ballistic-missile missile, space-based telescopes, space stations or components thereof, and the like. In the illustrated example, system 20 includes a solid propellant grain 22, a solid propellant grain 24, an actuator 26, an actuator 28, a plurality of exhaust nozzles 30, 31, 32, 33, 34, 35, 36, 37, 38, 40, 42, and 44 (see FIG. 4 to observe exhaust nozzles 35, 37, and 44, see FIG. 4 to observe exhaust nozzle 31), a plurality of valves 46, 48, 50, 51, 52, 54, 56, and 58 associated with the plurality of exhaust nozzles, a pressure sensor 60, a pressure vessel 62 (which, in the embodiment illustrated in FIG. 1, is also the object that is being controlled during exoatmospheric travel), and a controller 64. Other embodiments of system 20 may include additional components including, but not limited to, electronic data storage devices, user input devices, wireless communication devices, and attitude and/or orientation detecting devices.

Solid propellant grain 22 and solid propellant grain 24 comprise the solid propellant that, when brought into close proximity with one another, will automatically combust and to generate gas. In the illustrated embodiment, solid propellant grain 22 comprises a fuel while solid propellant grain 24 comprises an oxidizer. The use of solid propellant grains such as solid propellant grain 22 and solid propellant grain 24 is disclosed and described in detail in Geisler and, for the sake of brevity, will not be repeated here.

Actuators 26, 28 may comprise any device effective to move solid propellant grain 22 and solid propellant grain 24 towards and away from one another. In some embodiments, actuators 26 and 28 comprise electronically actuatable actuators that are configured to extend and/or retract solid propellant grains 22 and 24 in response to the receipt of an electronic signal such as an electronic signal sent by an electronic controller. Examples of actuators that are suitable for use with system 20 include, but are not limited to, electro mechanical actuators, piezo-electric actuators, hydraulic actuators or any other servo type actuator, preferably, but not necessarily in a closed position loop configuration.

In the illustrated embodiment, solid propellant grains 22 and 24 as well as actuators 26 and 28 are disposed within pressure vessel 62. In this configuration, the gas generated as a result of the combustion of solid propellant grains 22 and 24 will automatically be introduced into an interior portion of pressure vessel 62. In some embodiments, it may be desirable to position actuators 26 and 28 at locations within pressure vessel 62 that allow actuators 26 and 28 to support solid propellant grains 22 and 24 at an approximate center of gravity of system 20, of pressure vessel 62, and/or of the object being controlled by system 20. In other embodiments, such as those as described below, the solid propellant grains and their respective actuators may be mounted externally with respect to the system's pressure vessel. In such embodiments, ducts may be needed to direct the gas that is produced as a result of the combustion of the solid propellant grains into the pressure vessel.

Exhaust nozzles 30, 31, 32, 33, 34, 36, 38, 40, 42, and 44 (see FIG. 4 to observe exhaust nozzle 31) may each comprise any suitable exhaust nozzle effective to fluidly communicate with an interior portion of pressure vessel 62 and further effective to exhaust gases or other fluids from the interior portion of pressure vessel 62. These exhaust nozzles may be configured to vent gas from an interior portion of pressure vessel 62 without altering its direction (e.g., Exhaust nozzles 30, 32, 38, 40, 42, and 44 - see FIG. 4 to observe exhaust nozzle 44) or they may be configured to alter the direction of gas flow as the gas vents from pressure vessel 62 (e.g. exhaust nozzles 34, 35, 36, and 37 - see FIG. 4 to observe exhaust nozzles 35 and 37). In embodiments where the object being controlled by system 20 during exoatmospheric travel is the pressure vessel itself (such as an anti-ballistic missile), exhaust nozzles may be positioned at various locations on pressure vessel 62 to produce different types of motion when the gas is exhausted. The different types of motion that may be imparted to pressure vessel 62 as it travels through exoatmospheric will be described and illustrated below. In embodiments where the object being controlled by system 20 is an object other than pressure vessel 62 (such as a manned spacecraft), the exhaust nozzles may be positioned at various locations on the object itself to produce different types of motion when the gas is exhausted.

In the embodiment illustrated in FIG. 1, valves 46, 48, 50, 51, 52, 54, 56, and 58 are each associated with a single respective exhaust nozzle. In other embodiments, a single valve may be associated with more than one exhaust nozzles. Valves 46, 48, 50, 51, 52, 54, 56, and 58 may comprise any device effective to selectively close off and open a pathway through an associated exhaust nozzle. In some embodiments, valves 46, 48, 50, 51, 52, 54, 56, and 58 comprise electronically actuatable valves that are configured to open and/or close their associated exhaust nozzles in response to the receipt of an electronic signal, such as an electronic signal sent by an electronic controller. Examples of valves that are suitable for use with system 20 include, but are not limited to, pintle or needle valves where the nozzle throat area is varied to control the volume of gas flow.

Pressure sensor 60 may be any device effective to measure an ambient pressure within pressure vessel 62. In some embodiments, pressure sensor 60 may be configured to generate an electronic signal indicative of the pressure measured within pressure vessel 62.

Controller 64 may be any type of computer, computer system, or microprocessor that is configured to perform algorithms, to execute software applications, to execute subroutines and/or to be loaded with and to execute any other type of computer program. Controller 64 may comprise a single processor or a plurality of processors acting in concert. In some embodiments, controller 64 may be dedicated for use exclusively with system 20, while in other embodiments controller 64 may be shared with, or may be associated with, other systems on board the object that is being controlled by system 20. Although the illustrated embodiment depicts controller 64 as being mounted internally within pressure vessel 62, it should be understood that, in other embodiments, controller 64 may be mounted to an external surface of pressure vessel 62 or elsewhere on the object that is being controlled by system 20.

Controller 64 is communicatively coupled with pressure sensor 60 and is operatively coupled with actuators 26 and 28 and valves 46, 48, 50, 51, 52, 54, 56, and 58. Such communicative and operative coupling may be implemented through the use of any suitable means of transmission including both wired and wireless connections. For example, each component may be physically connected to controller 64 via a coaxial cable or via any other type of wired connection that is effective to convey signals. In the embodiment illustrated in FIG. 1, controller 64 is directly operatively coupled to each of the other components via leads 66. Leads 66 are illustrated in FIG. 1 only and are eliminated from each of the remaining figures for the sake of clarity. In other embodiments, each component may be operatively coupled to controller 64 indirectly across a vehicle bus. In still other examples, each component may be wirelessly operatively coupled to controller 64 via a Bluetooth connection, a WiFi connection or the like.

Being communicatively and/or operatively coupled provides a pathway for the transmission of commands, instructions, interrogations and other signals between controller 64 and each of the other components. Through this coupling, controller 64 may control and/or communicate with each of the other components. Each of the other components discussed above may be configured to interface and engage with controller 64. For example, actuators 26 and 28 may be configured to receive commands from controller 64 and may move solid propellant grains 22 and 24 towards or away from one another in response to such commands. Similarly, valves 46, 48, 50, 51, 52, 54, 56, and 58 may open and/or close their respective exhaust nozzles in response to such commands. Additionally, pressure sensor 60 may transmit the signal indicative of the internal pressure of pressure vessel 62 to controller 64 via such coupling.

In some embodiments, controller 64 may be configured to receive instructions from an external agency relating to the control of the object that is traveling through exoatmospheric space. For example, wireless instructions may be transmitted to controller 64 from a ground-based, airborne, and/or space-based transmitter. Controller 64 may be configured to receive such wireless instructions and, upon receipt, to provide corresponding instructions to the various valves and actuators of system 20 necessary to execute the wirelessly received instructions. In other embodiments, controller 64 may be configured to interact with an electronic storage device located onboard the object or coupled to system 20 to obtain instructions and/or guidance objectives. In other embodiments, controller 64 may be programmed with guidance objectives that controller 64 may utilize when providing commands to the various components of system 20.

Controller 64 is configured to provide commands to actuators 26 and 28 and to valves 46, 48, 50, 51, 52, 54, 56 and 58 in order to carry out the guidance objectives. For example, controller 64 is configured to command actuators 26 and 28 to move solid propellant grains 22 and 24 towards one another in order to increase the burn rate and thereby elevate the ambient pressure inside pressure vessel 62. Controller 64 is further configured to command one or more of valves 46, 48, 50, 51, 52, 54, 56, and 58 to open either by itself or in combination with other valves to impart a desire thrust to pressure vessel 62 or to another object being controlled by system 20. Controller 64 is further configured to command one or more of the valves to close when thrust is no longer needed. Controller 64 may also be configured to control the rate at which solid propellant grains 22 and 24 are moved towards one another to maintain a desired rate of combustion and/or a constant pressure inside pressure vessel 62 to offset any diminution in pressure inside of pressure vessel 62 as a result of exhausting gas through one or more of the exhaust nozzles. Controller 64 may be further configured to utilize the signal generated by pressure sensor 60 when determining the rate at which solid propellant grains 22 and 24 should be moved towards or away from one another.

Also illustrated in FIG. 1 is a set of axes 68. Set of axes 68 depicts an X axis 69, a Y axis 71, and a Z axis 73. Set of axes 68 is provided to give the viewer an orientation to assist in understanding the description provided below. Any reference herein to an X axis, a Y axis, and/or a Z axis, is a reference to the axes depicted in set of axes 68.

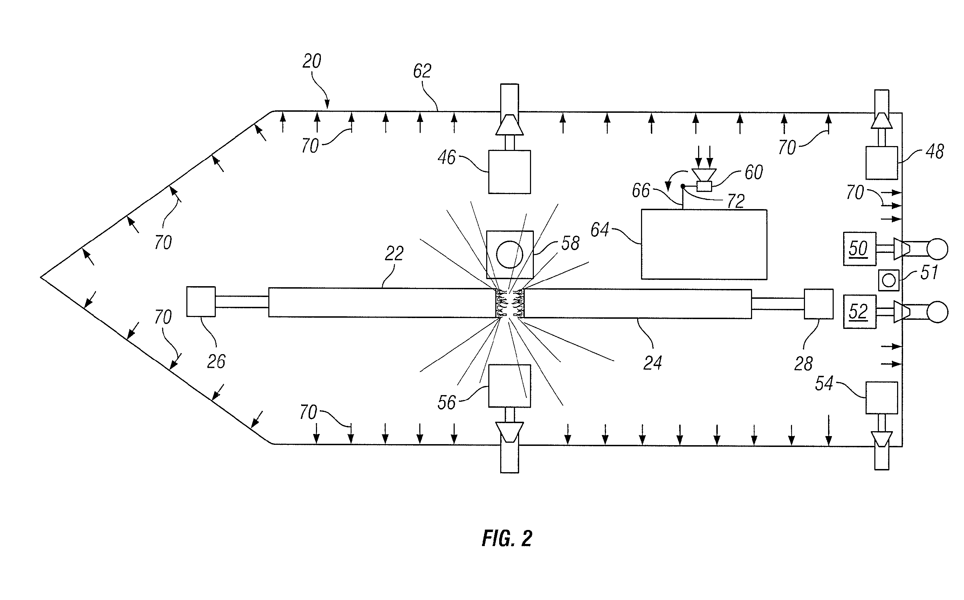

FIGs. 2 - 7 illustrate various operating modes of system 20. With continuing reference to FIG. 1, leads 66 have been almost entirely omitted from FIGS. 1-7. Leads 66 have been removed for the purposes of simplifying the illustrations. It should be understood that the various components of system 20 depicted in FIGs. 2 - 7 Are still communicatively and operatively coupled with one another as indicated in FIG. 1.

In FIG. 2, controller 64 transmits an instruction to actuators 26 and 28 to actuate in a manner that moves solid propellant grains 22 and 24 towards one another. As illustrated, when solid propellant grains 22 and 24 are brought together, they automatically combust. The combustion causes portions of solid propellant grains 22 and 24 to enter a gaseous state. This occurs while valves 46, 48, 50, 51, 52, 54, 56, and 58 are all closed. Therefore, the gas formed by the combustion of solid propellant grains 22 and 24 will be substantially entirely contained within pressure vessel 62 and will therefore fill the internal portion of pressure vessel 62, causing the internal pressure within pressure vessel 62 to increase. This increase in internal pressure is indicated by arrows 70 indicating an outward force acting on an internal surface of an outer skin of pressure vessel 62. The increase in the internal pressure of pressure vessel 62 is detected and measured by pressure sensor 60. In the illustrated embodiment, pressure sensor 60 is configured to generate a signal 72 that is indicative of the internal pressure of pressure vessel 62 and further configured to transmit signal 72 to controller 64.

Controller 64 is configured to receive signal 72 and is further configured to revise the instruction sent to actuators 26 and 28, as necessary. For example, if the internal pressure within pressure vessel 62 is increasing at a rate that is greater than a desired rate, controller 64 may be configured to modify the instruction sent to actuators 26 and 28 so as to cause solid propellant grains 22 and 24 to be positioned further apart. This would reduce the burn rate of solid propellant grains 22 and 24 and, as a result, would reduce the rate at which the internal pressure of pressure vessel 62 increases. Conversely, if the internal pressure within pressure vessel 62 is increasing at a rate that is less than a desired rate, controller 64 may be configured to modify the instruction sent to actuators 26 and 28 so as to cause solid propellant grains 22 and 24 to be positioned closer together. This would increase the burn rate of solid propellant grains 22 and 24 and, as a result, would increase the rate at which the internal pressure of pressure vessel 62 increases.

Controller 64 is further configured to actuate one or more of valves 46, 48, 50, 51, 52, 54, 56, and 58 to change the velocity vector, the attitude, or both, of pressure vessel 62 as it travels through exoatmospheric space. Once the internal pressure within pressure vessel 62 reaches a predetermined pressure, controller 64 may transmit an instruction to one or more of valves 46, 48, 50, 51, 52, 54, 56, and 58 that will result in changes in the velocity vector and/or the attitude of pressure vessel 62, as discussed below in detail. In this manner, the flight path and the orientation of pressure vessel 62 may be controlled by controller 64. Such control can be exercised to maneuver the object traveling through exoatmospheric space to accomplish a wide variety of tasks. For instance, using system 20, a warhead may be guided to intercept an incoming intercontinental ballistic missile and a manned spacecraft may be reoriented prior to initiating a reentry procedure. Additionally, because solid propellant grains 22 and 24 can sustain combustion under exceedingly low pressures as compared with conventional solid propellants, an object can be given very subtle guidance inputs that permit the performance of very delicate maneuvers. For example, a spacecraft may be guided by system 20 to perform a docking procedure that allows it to dock with another spacecraft and a telescope may be continuously reoriented such that its lens remains trained on a distant point source of light. Examples of the type of control inputs that can be provided by system 20 will now be described.

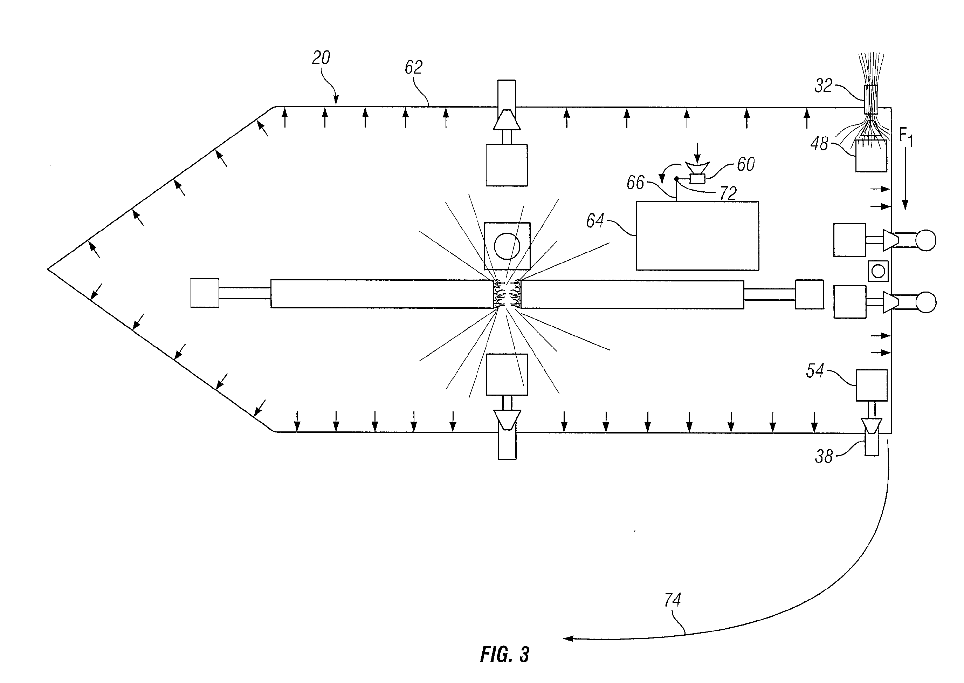

In FIG. 3, controller 64 has sent an instruction to valve 48 that causes a valve 48 actuate in a manner that opens exhaust nozzle 32. As a result of opening valve 48, the gas contained within pressure vessel 62 escapes from pressure vessel 62 as illustrated. The outward flow of gas through exhaust nozzle 32 causes a reaction force F₁ to act on pressure vessel 62 in the direction indicated. Force F₁ causes pressure vessel 62 to rotate about the Z axis in the direction indicated by arrow 74. This motion may be useful, for example, in situations where it is desirable to keep a forward portion of pressure vessel 62 (where a camera lens may be mounted) pointing towards a target. Once pressure vessel 62 reaches a desired pitch angle, controller 64 may send an instruction to valve 48 close and may further send an instruction to valve 54 to open to permit a gas to escape through exhaust nozzle 38 and thus create a counteracting force that will stop the rotation of pressure vessel 62 about the Z axis.

In FIG. 4, controller 64 has sent an instruction to the valves controlling exhaust nozzles 35 and 36, causing these valves to open and thereby allowing the gas inside pressure vessel 62 to escape. The escape of gas through exhaust nozzle 35 causes a reaction force F₂ to act on pressure vessel 62 and the escape of gas through exhaust nozzle 36 causes a reaction force F₃ to act on pressure vessel 62. As illustrated, exhaust valves 35 and 36 are radially offset from an axial center point 76 of pressure vessel 62. Accordingly, the oppositely acting forces F₂ and F₃ will cause pressure vessel 62 to rotate about the X axis which runs through the axial center of pressure vessel 62. This motion may be useful, for example, in situations where it is desirable to change the viewing angle of a window of a manned spacecraft. Once pressure vessel 62 reaches a desired roll angle, controller 64 may send an instruction to the valves associated with exhaust nozzles 35 and 36 to close and may further send an instruction to the valves associated with exhaust nozzles 34 and 37 to open to permit a gas to escape through exhaust nozzles 34 and 37 and thus create a counteracting force that will stop the rotation of pressure vessel 62 about the X axis.

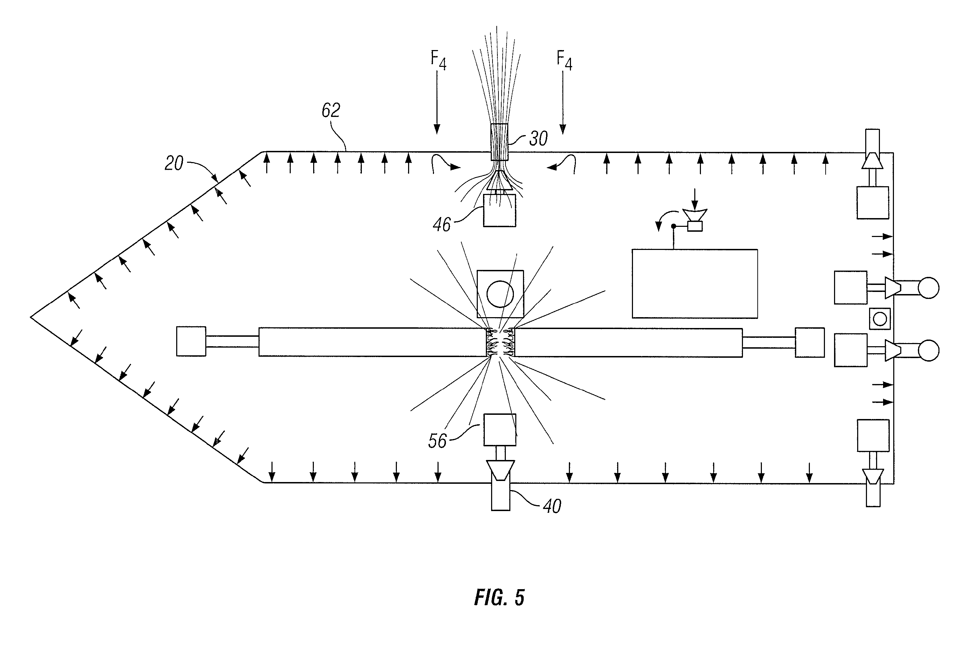

In FIG. 5, controller 64 has sent an instruction to valve 46 causing valve 46 to open and thereby allow the gas inside pressure vessel 62 to escape. The escape of gas through exhaust nozzle 30 causes a reaction force F₄ to act on pressure vessel 62. Exhaust valve 30 has been positioned such that reaction force F₄ will act on the approximate center of gravity of pressure vessel 62. Accordingly, reaction force F₄ will cause pressure vessel 62 to translate along the Y axis and thus affect the velocity vector of pressure vessel 62 as it moves from right to left (from the perspective of FIG. 5) through exoatmospheric space. This motion may be useful, for example, in situations where it is desirable to maintain an object on a path where it will intercept another object such as an incoming ballistic missile warhead. Once pressure vessel 62 has translated along the y-axis by a desired amount, controller 64 may send an instruction to valve 46 to close and may further send an instruction to valve 56 to open to permit a gas to escape through exhaust nozzles 40 and thus create a counteracting force that will stop the translation of pressure vessel 62 along the Y axis.

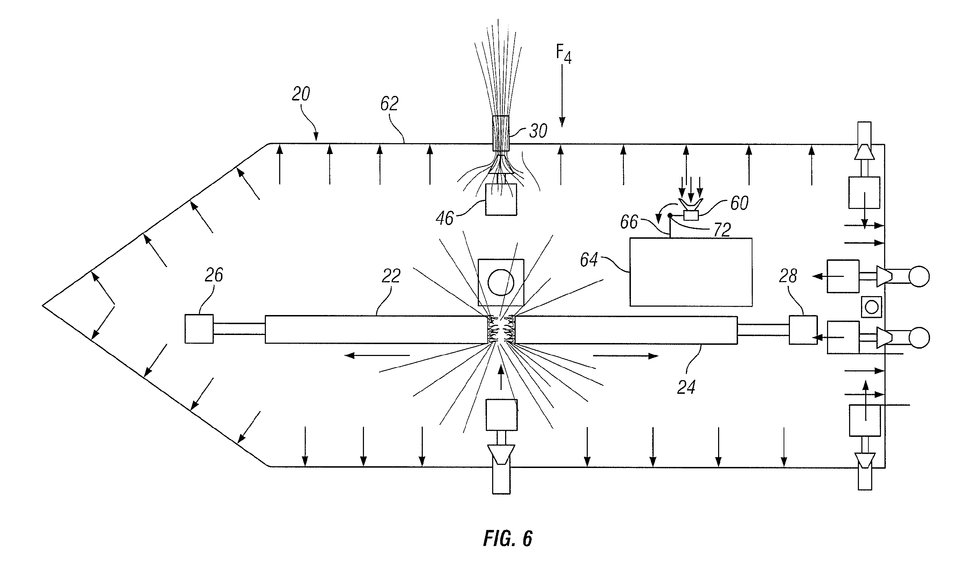

FIG. 6 depicts a situation where the internal pressure within pressure vessel 62 rises above a predetermined threshold. Although gas is venting through exhaust nozzle 30, the rate at which the gas is exhausting through exhaust nozzle 30 may be slower than the rate at which solid propellant grains 22 and 24 are adding new gas to the internal portion of pressure vessel 62, thus causing the internal pressure within pressure vessel 62 to rise. The elevated pressure will be detected by pressure sensor 60. Pressure sensor 60 will generate signal 72 which will be transmitted along lead 66 to controller 64. Upon receipt of signal 72, controller 64 is configured to determine that the pressure inside pressure vessel 62 has exceeded the predetermined threshold and is further configured to take remedial steps.

In an example where controller 64 has instructed actuators 26 and 28 to move solid propellant grains 22 and 24 towards one another at a constant rate to maintain a constant rate of combustion, controller 64 may attempt to remediate the overpressure condition by sending an instruction to actuators 26 and 28 that cause actuators 26 and 28 to stop moving solid propellant grains 22 and 24 towards one another. In this scenario, as solid propellant grains 22 and 24 continue to burn, the proximate ends of solid propellant grains 22 and 24 will automatically move apart as the material comprising solid propellant grains 22 and 28 is consumed by the combustion. As combustion continues, the gap between the respective ends of solid propellant grain 22 and solid propellant grain 24 will become too large to support combustion. At that time, the flame will extinguish and no additional gas will be introduced into pressure vessel 62. Whatever gas remains within pressure vessel 62 will exhaust through exhaust nozzle 30. Once the internal pressure of pressure vessel 62 falls to below the threshold pressure, controller 64 may send an instruction to valve 46 to close to prevent any further reduction of the internal pressure within pressure vessel 62.

In another example, controller 64 may be configured to not only halt the progress of solid propellant grains 22 and 24 towards one another, but when controller 64 may also send instructions to actuators 26 and 28 that will move solid propellant grains 22 and 24 away from one another. This remedial action will more rapidly extinguish the combustion and end the introduction of any additional gas into pressure vessel 62. In another example, controller 64 may be configured to open additional exhaust nozzles to allow for the rapid venting of gas from pressure vessel 62. This remedial action will permit the rapid reduction of internal pressure within pressure vessel 62.

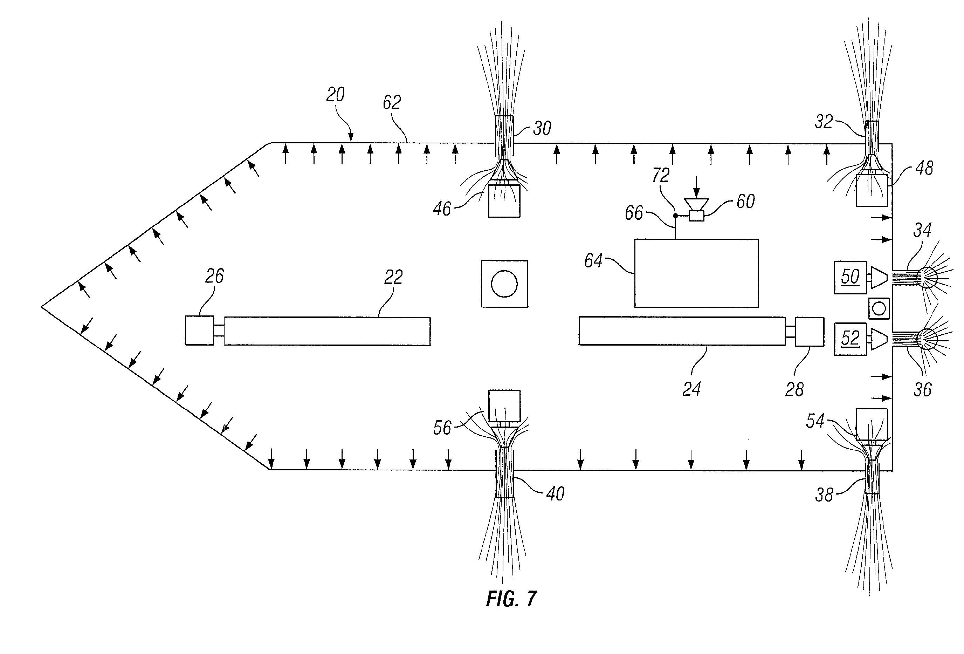

FIG. 7 illustrates pressure vessel 62 after controller 64 has remediated the overpressure condition illustrated in FIG. 6 by instructing actuators 26 and 28 to move solid propellant grains 22 and 24 away from one another and by instructing valves 48, 50, 52, 54, and 56 to open to permit the venting of gas from pressure vessel 62. As illustrated in FIG. 7, combustion of solid propellant grains 22 and 24 has ceased, thus eliminating the introduction of new gas into pressure vessel 62. As also illustrated in FIG. 7, gas is being exhausted through exhaust nozzles 30, 32, 34, 36, 38, and 40, thus reducing the internal pressure within pressure vessel 62.

With respect to FIGS. 1-7, the controller and the actuators have been illustrated as being situated inside of the pressure vessel. It should be understood that in other embodiments, the controller and a portion of the actuators (e.g., an electronic element of each actuator) may be situated outside of the pressure vessel. Physical penetration of the pressure vessel to control the actuators could be accomplished through the use of a sealed static or moving interface. A moving interface could be sealed via an o-ring or via a similar mechanism.

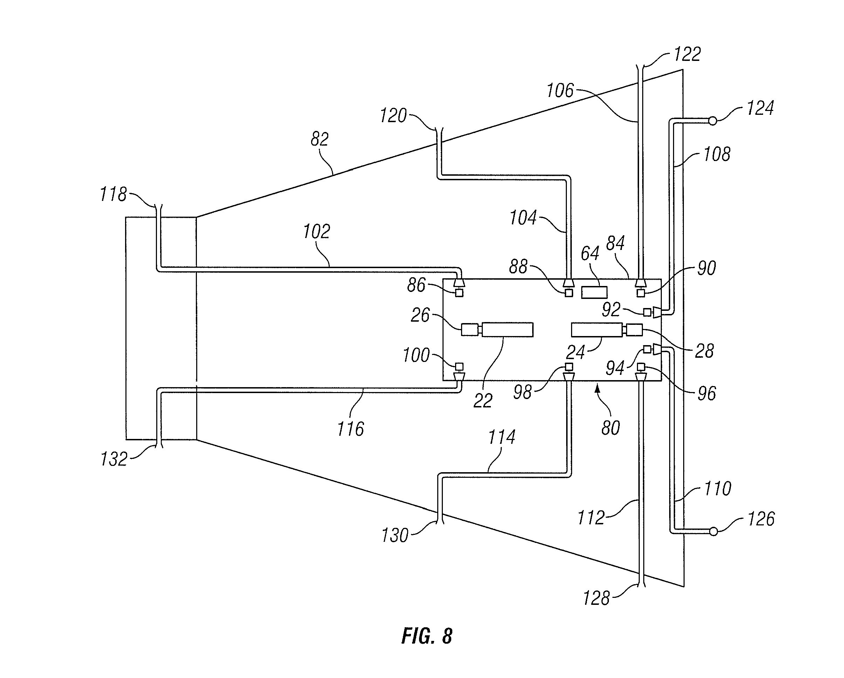

FIG. 8 illustrates an alternate embodiment 80 of a system for controlling an object 82 traveling through exoatmospheric space. As illustrated in FIG. 8, object 82 comprises a space capsule which may be used for manned space flight and alternate embodiment 80 is mounted internally within the space capsule.

With continuing reference to FIGS. 1-7, alternate embodiment 80 is similar to system 20. For example, alternate embodiment 80 includes solid propellant grains 22 and 24 that combust when brought within a predetermined distance from one another and actuators 26 and 28 that are configured to move solid propellant grains 22 and 24 towards and away from one another. Alternate embodiment 80 also includes a pressure vessel 84 that is designed and configured to store pressurized gas that is generated by the combustion of solid propellant grains 22 and 24. In alternate embodiment 80, solid propellant grains 22 and 24 are positioned within pressure vessel 84. Alternate embodiment 80 also includes valves 86, 88, 90, 92, 94, 96, 98, and 100 that are configured to selectively open and close to alternately exhaust the pressurized gas from, and retain the pressurized gas within pressure vessel 84. Alternate embodiment 80 also includes controller 64 to coordinate the actuation of the various actuators and valves. As with FIGS. 1-7, the leads that communicatively/operatively coupled controller 64 with the actuators and valves have been omitted from the illustration for the sake of clarity. Additionally, although a pressure sensor is not illustrated in FIG. 8, it should be understood that alternate embodiment 80 may also include a pressure sensor that is configured to measure the pressure internal to pressure vessel 84 and to send signals indicative of the internal pressure to controller 64.

Alternate embodiment 80 differs from system 20 in that alternate embodiment 80 includes ducts 102, 104, 106, 108, 110, 112, 114, and 116 that are coupled to pressure vessel 84 at locations that correspond with valves 86, 88, 90, 92, 94, 96, 98, and 100. Additionally, whereas the system 20 included exhaust nozzles positioned in various locations around the periphery of pressure vessel 62, alternate embodiment 80 includes exhaust nozzles 118, 120, 122, 124, 126, 128, 130, and 132 which are positioned remotely from pressure vessel 84 at various locations around the periphery of object 82. Ducts 102, 104, 106, 108, 110, 112, 114, and 116 connect exhaust nozzles 118, 120, 122, 124, 126, 128, 130, and 132 to valves 86, 88, 90, 92, 94, 96, 98, and 100, respective. Configured in this manner, alternate embodiment 80 is able to deliver the pressurized gas to the various locations around the periphery of object 82 where the exhaust nozzles are located. Accordingly, when one or more of the valves are opened, the pressurized gas will be routed to a respective exhaust nozzle where the pressurized gas will be expelled into exoatmospheric space. This expulsion of pressurized gas will generate a reaction force that will act directly on object 82 instead of acting on pressure vessel 84 as was the case with system 20. Using alternate embodiment 80, a relatively large spacecraft or other object can be controlled using a relatively small pressure vessel.

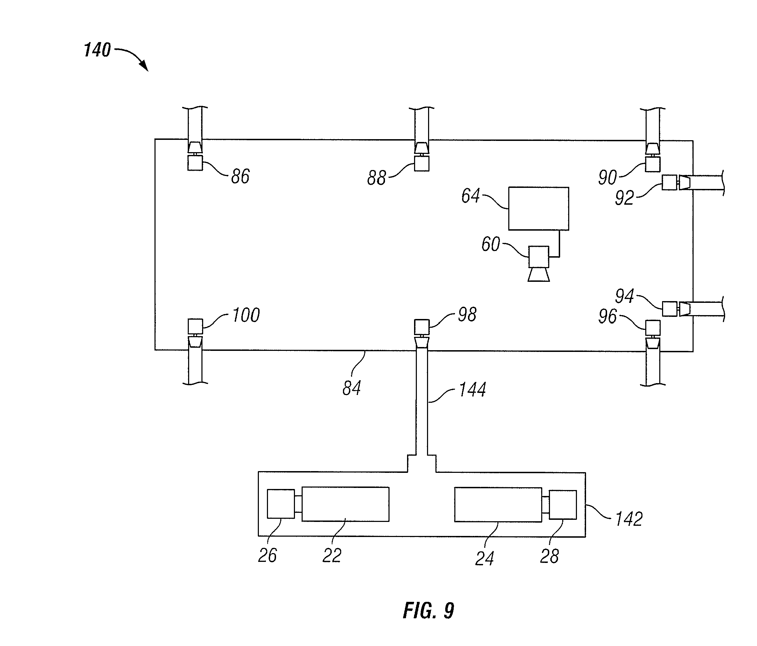

FIG. 9 illustrates an alternate embodiment 140 of a system for controlling an object traveling through exoatmospheric space. With continuing reference to FIGS. 1-8, a primary distinction between alternate embodiment 140 an alternate embodiment 80 is that in alternate embodiment 140, solid propellant grains 22 and 24 and their respective actuators 26 and 28 have been removed from pressure vessel 84 and have been placed in a secondary pressure vessel 142. As solid propellant grains 22 and 24 are moved towards one another, the gas generated by their combustion will be directed through duct 144 into pressure vessel 84 where it will be stored for later delivery to exhaust nozzles 118, 120, 122, 124, 126, 128, 130, and 132. By removing solid propellant grains 22 and 24 from the internal portion of pressure vessel 84, replacement of consumed solid propellant grains 22 and 24 may be facilitated.

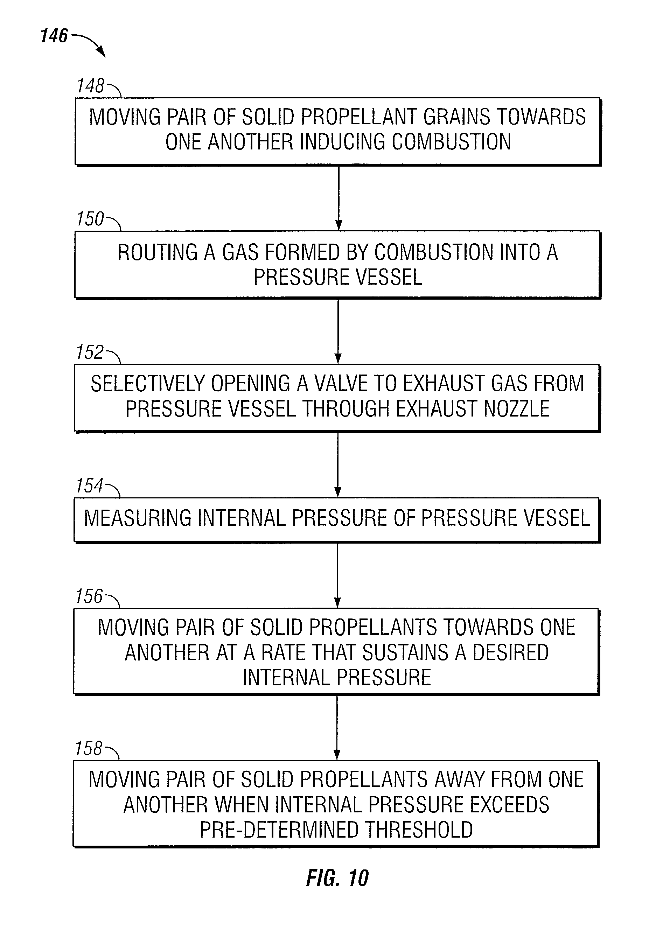

FIG. 10 is a block diagram illustrating an embodiment of a method 146 for controlling an object traveling through exoatmospheric space. With continuing reference to FIGS. 1-9, method 146 may be used with system 20, alternate embodiment 80, and/or alternate embodiment 140, described above, or with any other system that utilizes solid propellants wherein the fuel and oxidizer are separated out and which combust when moved to within a predetermined distance of one another to generate combustion and gas, such gas being housed in a pressure vessel.

At block 148, a pair of solid propellant grains, one comprising fuel and the other comprising an oxidizer, are moved towards one another to induce combustion. The combustion will produce a gas which may be used to control movement of the object traveling through exoatmospheric space.

At block 150, the gas formed by the combustion is routed into a pressure vessel. The pressure vessel is designed and configured to store pressurized gas. In some embodiments, the pressure vessel may be the object to be controlled as it moves through exoatmospheric space while in other embodiments, the pressure vessel may be a component mounted on board the object that is to be controlled. The pressure vessel may include a plurality of valves and exhaust nozzles as discussed above with respect to system 20. Alternatively, the pressure vessel may include a plurality of valves that control access to ducts which are configured to route pressurized gas to remotely located exhaust nozzles.

At block 152, the valves associated with the pressure vessel are selectively opened to exhaust pressurized gas from the pressure vessel through an exhaust nozzle. The control of such valves may be administered by a controller such as controller 64, described above. The exhausting of pressurized gas through the exhaust nozzles will result in a reaction force that can be used to control the object moving through exoatmospheric space.

At block 154, the internal pressure of the pressure vessel is measured. This can be accomplished using a pressure sensor such as pressure sensor 60, described above.

At block 156, the pair of solid propellants may be moved towards one another at a rate that is sufficient to sustain a desired internal pressure within the pressure vessel. For example, the solid propellants movement towards one another may be accelerated as needed to offset any detected or anticipated reduction in the pressure of the pressurized gas within the pressure vessel as the pressurized gas within the pressure vessel is exhausted through one or more exhaust nozzles. In another example, solid propellants may be moved away from one another to extinguish the combustion and thereby prevent adding any additional gas to the pressurized vessel all the valves leading to the exhaust nozzles are closed.

At block 158, if it is determined that the pressurized gas inside of the pressure vessel exceeds a predetermined threshold, remedial action may be taken. For example, the solid propellants may be moved away from one another to prevent adding any further gas to the pressurized vessel. Additionally, one or more of the valves associated with one or more of the exhaust nozzles may be opened to permit expulsion of pressurized gas, thereby reducing the pressure within the pressurized vessel.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system for controlling an object traveling through exoatmospheric space, the system comprising:
a pressure vessel;
a pair of solid propellant grains associated with the pressure vessel configured to direct a gas into the pressure vessel during combustion;
an exhaust nozzle in fluid communication with the pressure vessel; and
a valve coupled with the exhaust nozzle configured to selectively obstruct the gas from venting through the exhaust nozzle.

2. A system for controlling an object traveling through exoatmospheric space, the system comprising:
a first pressure vessel;
a pair of solid propellant grains disposed opposite one another, the pair of solid propellant grains configured to combust when positioned within a predetermined distance of one another and to extinguish when moved apart from one another, the pair of solid propellant grains being associated with the first pressure vessel such that a gas generated during combustion of the pair of solid propellant grains enters the first pressure vessel;
an actuator configured to selectively move the pair of solid propellant grains towards and away from one another;
a plurality of exhaust nozzles in fluid communication with the first pressure vessel and configured to exhaust the gas from the first pressure vessel;
a plurality of valves associated, respectively, with the plurality of exhaust nozzles, each valve configured to selectively obstruct a flow of gas through a respective exhaust nozzle; and
a controller operatively coupled to each valve of the plurality of valves, the controller configured to selectively open and close each valve.

3. The system of claim 2, wherein the plurality of exhaust nozzles are directly connected to the first pressure vessel.

4. The system of claim 3, wherein an exhaust nozzle of the plurality of exhaust nozzles is positioned to exhaust the gas in a direction such that a reaction force will pass through a center of gravity of the object.

5. The system of claim 3, wherein an exhaust nozzle of the plurality of exhaust nozzles is positioned at a rear of the object with respect to a direction of travel of the object and is further positioned to rotate the object about an X axis.

6. The system of claim 3, wherein an exhaust nozzle of the plurality of exhaust nozzles is positioned at a rear of the object with respect to a direction of travel of the object and is further positioned to rotate the object about a Z axis.

7. The system of claim 2, wherein the plurality of exhaust nozzles are spaced apart from the first pressure vessel and wherein each exhaust nozzle of the plurality of exhaust nozzles is connected to the first pressure vessel via a duct.

8. The system of claim 2, wherein the pair of solid propellant grains are disposed within the first pressure vessel.

9. The system of claim 8, wherein the first pressure vessel has a substantially larger volume than a volume occupied by the pair of solid propellant grains.

10. The system of claim 2, wherein the pair of solid propellant grains are disposed in a second pressure vessel, wherein the second pressure vessel is in fluid communication with the first pressure vessel, and wherein combustion of the pair of solid propellant grains directs the gas into the first pressure vessel.

11. The system of claim 2, wherein a first solid propellant grain of the pair of solid propellant grains comprises a fuel and wherein a second solid propellant grain of the pair of solid propellant grains comprises an oxidizer.

12. The system of claim 2, wherein the controller is further operatively coupled with the actuator and is further configured to control the actuator to move the pair of solid propellant grains towards and away from one another.

13. The system of claim 2, further comprising a pressure sensor associated with the first pressure vessel, the pressure sensor configured to measure an internal pressure of the first pressure vessel and to generate a signal indicative of the internal pressure of the first pressure vessel.

14. The system of claim 13, wherein the pressure sensor is communicatively coupled with the controller and wherein the controller is configured to receive the signal.

15. The system of claim 14, wherein the controller is configured to open one or more valves of the plurality of valves when the internal pressure exceeds a predetermined threshold.

16. The system of claim 14, wherein the controller is further operatively coupled with the actuator and is further configured to control the actuator to move the pair of solid propellant grains away from one another when the internal pressure exceeds a predetermined threshold.

17. The system of claim 14, wherein the controller is further operatively coupled with the actuator and is further configured to control the actuator to move the pair of solid propellant grains towards one another at a rate that is effective to sustain the internal pressure of the first pressure vessel at a desired level.

18. A method for controlling an object traveling through exoatmospheric space, the method comprising the steps of:
moving a pair of solid propellant grains towards one another to induce combustion;
routing a gas formed by the combustion into a pressure vessel; and
selectively opening a valve to exhaust the gas from the pressure vessel through an exhaust nozzle, whereby movement of the object can be effected.

19. The method of claim 18, further comprising the steps of measuring an internal pressure of the pressure vessel and moving the pair of solid propellant grains towards one another at a rate that sustains a desired internal pressure within the pressure vessel.

20. The method of claim 18, further comprising the steps of measuring an internal pressure of the pressure vessel and moving the pair of solid propellant grains away from one another when the internal pressure measured within the pressure vessel exceeds a predetermined threshold.
